## Europäisches Patentamt

(19) **European Patent Office**

**Office européen des brevets**

(11) Publication number: **0 111 353**
**B1**

## (12) EUROPEAN PATENT SPECIFICATION

(45) Date of publication of patent specification: **13.04.88**

(51) Int. Cl.⁴: $E\ 21\ B\ 47/04$, $E\ 21\ B\ 43/28$, $G\ 01\ F\ 23/26$

(21) Application number: **83201618.2**

(22) Date of filing: **14.11.83**

(54) Blanket-medium/brine interface detection in a solution-mining process.

(30) Priority: **13.12.82 GB 8235500**

(43) Date of publication of application:
**20.06.84 Bulletin 84/25**

(45) Publication of the grant of the patent:
**13.04.88 Bulletin 88/15**

(84) Designated Contracting States:
**DE FR GB NL**

(56) References cited:
**DE-A-2 555 720**
**DE-B-2 621 142**
**FR-A-2 205 996**
**GB-A- 578 886**
**US-A-2 409 674**
**US-A-2 688 872**

(73) Proprietor: **SHELL INTERNATIONALE RESEARCH MAATSCHAPPIJ B.V.**
**Carel van Bylandtlaan 30**
**NL-2596 HR Den Haag (NL)**

(72) Inventor: **Vriezen, Peter Bernard**
**Volmerlaan 6**
**NL-2288 GD Rijswijk (NL)**
Inventor: **Jamieson, Andrew William**
**Volmerlaan 6**
**NL-2288 GD Rijswijk (NL)**
Inventor: **Van Namen, Remo Paul**
**Volmerlaan 6**
**NL-2288 GD Rijswijk (NL)**

(74) Representative: **Aalbers, Onno et al**
**P.O. Box 302**
**NL-2501 CH The Hague (NL)**

Courier Press, Leamington Spa, England.

## Description

The invention relates to a downhole tool for detecting capacitively the position or level of a blanket-medium/brine interface in subterranean salt cavities wherein the salt layers are mined by pumping a solution medium into the layers and by pumping out saturated brine, and wherein the blanket medium protects the roof of the subterranean cavity, wherein said tool is provided with a first electrode means which is placed at a determined distance from a second electrode means, both said electrode means being adapted for capacitive measurement and further comprising means for determining the capacitance of the said first and second electrode means, the said tool further being provided with means adapted to transmit the obtained information up-hole.

Such a tool is known from DE—A—2,621,142.

In a solution-mining process subterranean salt layers which are situated at a relatively large depth, for example 1500-2000 metres, are mined by injecting a suitable medium such as fresh water into the layers and pumping out saturated brine through separate tubings. The salt layers have for example a thickness of about 100 metres.

The saturated brine is processed further in any way suitable for the purpose in order to obtain the desired products. Usually the fresh water injection point is above the brine off-take point. However, reverse flow is also possible. It will be clear that, when fresh water is injected into the salt layers, a subterranean structure having a determined shape and comprising brine will be developed in these salt layers.

It is now desirable to protect the roof of such a structure by a "blanket medium" to prevent uncontrolled dissolution. An example of such a "blanket medium" is oil, but it will be clear to those skilled in the art that any suitable medium, for example gas, can be used to protect the roof of the structure.

Further, as the radial extent of the mined section increases, the roof-surface area becomes larger, so that additional oil must be injected to maintain a sufficiently thick protecting layer between roof and brine.

This can be achieved by keeping the oil-brine interface at a fixed level. Insufficient thickness of the blanket will result in local exposure of the roof to the brine, which in turn will cause more oil to disappear. Another cause of movement of the oil-brine interface could be local roof failure. Part of the roof may collapse, creating a "chimney", into which the oil can disappear leaving the remaining part of the roof unprotected. Hence, a safe mining process requires a continuous monitoring of the interface position and it will be clear that it is very important to have a good indication of the said position.

However, the accuracy of the tool of DE—A—2,621,142 is susceptible of improvement.

It is therefore an object of the invention to provide a down-hole tool to be used in a solution-mining process, which can detect accurately the interface position between oil-brine.

It is another object of the invention to provide a downhole tool to be used in a solution mining process which can be used to estimate the roof area at various stages of the mining process by measuring the change of the interface level when a known volume of oil is injected.

The tool of the invention therefore is characterized by that the first electrode means consists of a plurality of individual segments arranged one above another, wherein each individual segment has a height between 5 and 50 cm and a width between 1 and 5 cm, and in that the said second electrode means is the wall of a tubing, on which the tool is installed.

In this way it is possible to measure the interface position with an accuracy better than ±1 cm.

It can be remarked that US—A—2,688,872 discloses a downhole tool for the identification of well fluids and for determining the rate of oil and gas production, wherein a series of electrodes is present in order to measure the resistance of the surrounding media.

Further, GB—A—578,886 discloses a capacitive segmented level indicator for liquids in a storage cavern or vessel. However, the specific tool of the invention in order to measure accurately the blanket medium/brine interface in solution mining cannot be derived therefrom.

Another advantage of the downhole tool of the invention is that it allows calibration of the level measuring system during the actual measurement by observing the capacitance of segments fully immersed in the brine and oil.

A further advantage of the tool of the invention is that it allows compensation of homogeneous fouling of the measuring section.

The downhole tool of the invention will now be described by way of example in more detail with reference to the accompanying drawings, in which:

Fig. 1 represents schematically a development of successive subterranean structures, obtained by a solution-mining process;

Fig. 2 represents schematically a subterranean structure, in which the blanket-medium/brine interface level has changed due to local roof failure;

Fig. 3a and Fig. 3b represent schematically advantageous embodiments of the invention;

Fig. 4 shows a longitudinal cross-section of an advantageous embodiment of the invention.

The downhole tool of the invention has been based upon the capacitive measuring principle, in which the difference in capacitances for blanket medium and for cavity medium (brine) is used in order to determine the interface position. The capacitive measuring principle as such is known to those skilled in the art and will not be described in detail.

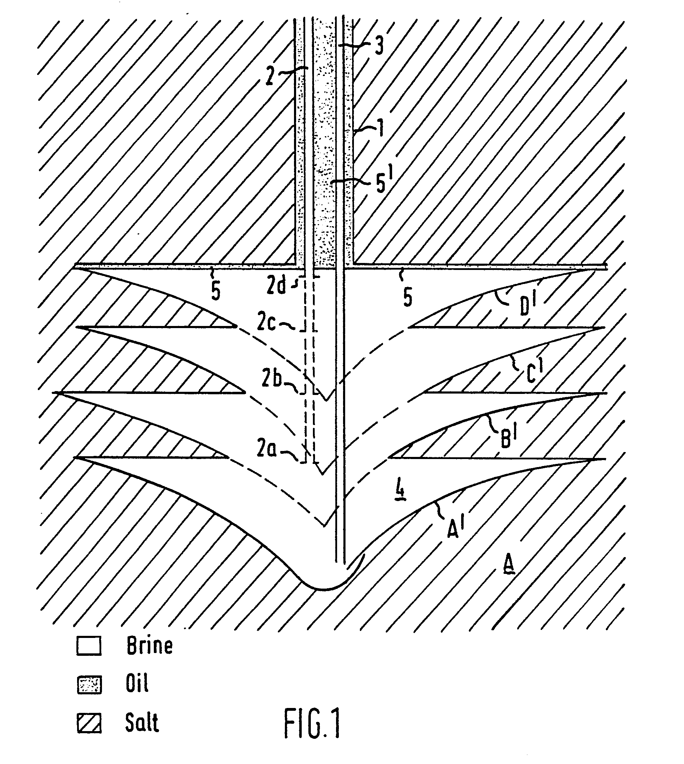

With reference now to Fig. 1, a borehole 1 has been shown together with an injection tubing 2 and a production tubing 3. The reference numbers 2a—d represent successive positions of the injection tubing 2.

In the first position 2a of the injection tubing 2 a suitable medium, such as fresh water, is injected into the salt layer A; brine 4 is developed in this layer and is pumped out through the production tubing 3 in any suitable way.

When, as shown, the fresh water is injected above the off-take point, a so-called "morning glory" structure A' results.

As already indicated in the above, the roof of the structure is protected by a blanket medium, such as oil. After the "morning glory" structure A' has reached a determined diameter, for example about 100 metres, the oil level is moved upwards over, for example, 2 metres by producing back the oil to make a new "cut". At the same time the injection point is taken upwards by the same distance. In this way successive "morning glory" structures B', C', D' can be developed.

In Fig. 1 the roof of the upper structure D' is protected by the oil 5', which is injected through the borehole 1 in any way suitable for the purpose and provides a protective oil layer 5.

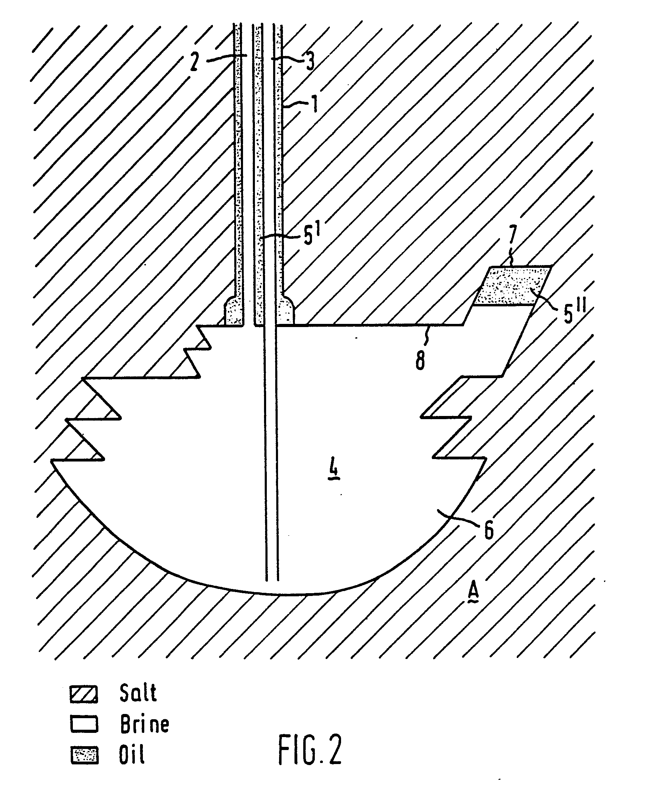

Fig. 2 shows schematically a cavern 6 in the salt layer A, in which a change in blanket-medium/brine interface level has occurred due to local roof failure. A "chimney" 7 has developed and comprises oil 5'', so that part of the roof 8 is unprotected. The reference numbers 1, 2, 3, 4 and 5' are the same as used in Fig. 1.

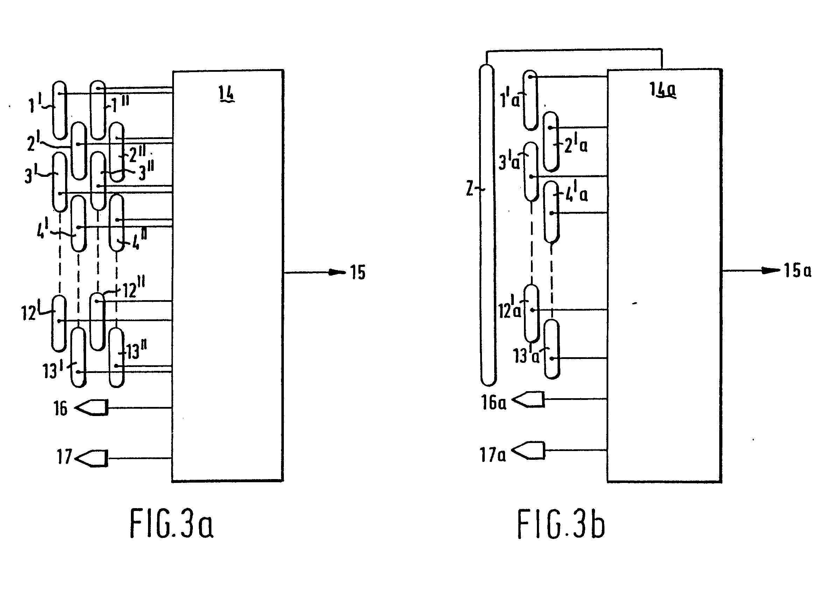

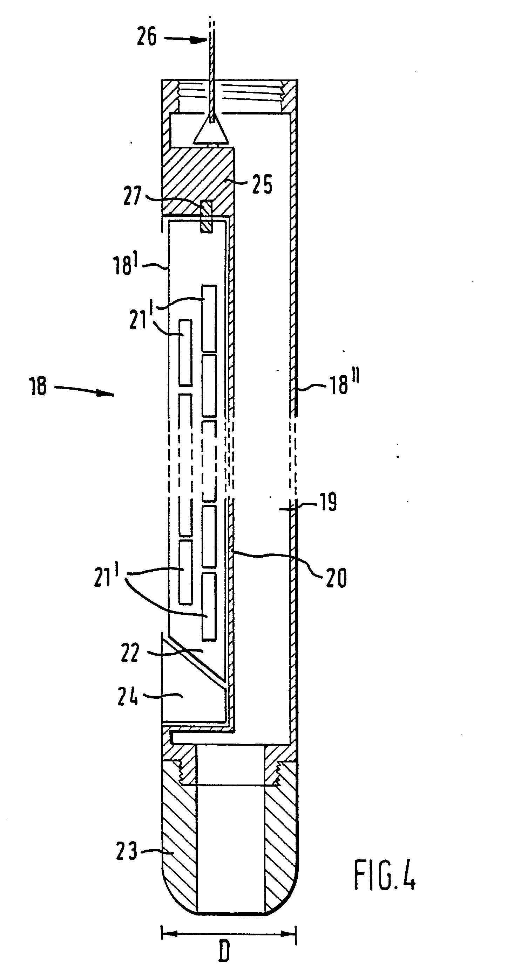

Fig. 3a shows schematically an advantageous embodiment of the downhole tool of the invention; in this embodiment of the tool both the first means and the second means of measuring section of the tool comprise a plurality of individual segments, thus forming capacitors 1', 1''—13', 13'', which are situated one above another. Each individual segment has a height between 5 and 50 cm and a width 1 and 5 cm. As will be explained afterwards, in particular with reference to Fig. 4, the downhole tool can be installed in any way suitable for the purpose. The individual capacitors 1', 1''—13', 13'', are connected in any way suitable for the purpose to any suitable downhole electronics, schematically shown as block 14, in order to measure the capacitances between the segments of a capacitor.

The downhole electronics may, for example, consist of oscillators and a multiplexer (not shown). Such components and the operation thereof are known as such to those skilled in the art and will not be described in detail.

The block 14 is connected in any way suitable for the purpose to the earth surface 15 (not shown) in order to transmit the measured capacitances to suitable devices for processing further the obtained data (not shown for reasons of clarity).

In an advantageous embodiment of the invention a temperature sensor 17 and/or a pressure sensor 16 may be provided at any suitable position on the downhole tool in order to obtain information concerning the temperature and pressure in the cavern. Geothermal temperatures at the cavern depth are about 60°C. The temperature of the injection fluids can vary between 10°C and 60°C. Practice has so far shown that the cavern temperature during production remains at about 60°C, even when water of 10°C is injected. However, injection of hot water up to 120°C may be considered. Thus, it will be clear that any downhole electronics should be able to operate at temperatures up to 120°C. The operating pressure in the cavern is up to some 500 bar.

Fig. 3b represents schematically another advantageous embodiment of the downhole tool of the invention; in this embodiment of the tool the first means consists of individual segments 1'a, 2'a ... 13'a, which are placed one below another. In this embodiment the segments are overlapping. The second means consisting of an electrode Z (schematically shown). The said first means and the said second means are connected by any means suitable for the purpose to a block 14a.

The block 14a has the same function as in Fig. 3a, and has been connected to the earth surface by any means suitable for the purpose (schematically shown as 15a). Further a pressure sensor 16a and a temperature sensor 17a have been represented.

Fig. 4 shows a longitudinal section of another advantageous embodiment of the invention. In this embodiment the downhole tool of the invention is installed on an injection tubing 18''. The way of installing such an injection tubing inside a borehole is known to those skilled in the art and will not be described in detail. The downhole tool 18 is provided with a measuring section 18'. The measuring section 18' may, for example, have a length of about 2 metres. However, it will be appreciated that any length suitable for the purpose is possible. In this embodiment the reference number 9 represents the flow path of the injected water through the injection tubing 18''.

The injection tubing is provided with a recessed part 20, made for example of stainless steel. The measuring section 18' is provided with a plurality of segments 21', arranged one above another, for example in an overlapping range. The diameter D of the tubing is for example 6.5 cm. However, it will be appreciated that any tubing diameter suitable for the purpose can be used.

The said segments have, for example, a height of 20 cm and a width of 2 cm. The number of the segments is 13 in an advantageous embodiment, but any suitable number can be applied.

Further, suitable downhole electronics have been installed in the measuring section 18' (not shown in detail for reasons of clarity). The downhole electronics and segments are built into a suitable medium 22, for example an epoxy-glass reinforced module.

The tubing 20 may be provided with a protecting end section 23. The mechanical connections of the end section and the injection tubing will be clear to those skilled in the art and will not be described in detail.

Further, a retaining block 24 may be present at a first side of the module 22 in order to retain the said module. The retaining block 24 may for example be bolted onto the tubing 20. A support 25 may be present at the other side of the module 22 and is adapted to attach a cable 26 to the measuring section 18'.

A suitable cable feedthrough 27 from the measuring section 18' to the module 22 is present. The whole system can be run on a cable, for example a mono-conductor cable 26, which remains connected during operation to provide the electrical communication to the surface.

In the embodiment of Fig. 4 the capacitance between the segments and the tubing wall is measured.

It will be appreciated that the segments 21' may have any shape suitable for the purpose and are not necessarily flat. Curved segments are for example possible in order to match the circular shape of the tubing.

It will be clear that the downhole tool has to operate in a hostile environment (saline water, high pressure, elevated temperatures, etc.).

Thus, any suitable material above to satisfy such requirements should be used. Various modifications of the invention will become apparent to those skilled in the art from the foregoing description and accompanying drawings. Such modification are intended to fall within the scope of the appended claims.

**Claims**

1. A downhole tool for detecting capacitively the position or level of a blanket-medium/brine interface in subterranean salt cavities wherein the salt layers are mined by pumping a solution medium into the layers and by pumping out saturated brine, and wherein the blanket medium protects the roof of the subterranean cavity, wherein said tool is provided with a first electrode means which is placed at a determined distance from a second electrode means, both said electrode means being adapted for capacitive measurement and further comprising means for determining the capacitance of the said first and second electrode means, the said tool further being provided with means adapted to transmit the obtained information up-hole, characterized in that the first electrode means consists of a plurality of individual segments arranged one above another, wherein each individual segment has a height between 5 and 50 cm and a width between 1 and 5 cm, and in that the said second electrode means is the wall of a tubing, on which the tool is installed.

2. The downhole tool as claimed in claim 1, characterized in that individual segments with overlapping range are present.

**Patentansprüche**

1. Bohrlochsonde zur kapazitativen Aufspürung der Position oder des Niveaus einer Deckmedium/Salzlösung-Grenzschicht in unterirdischen Salzhöhlungen, in welchen Salzschichten durch Einpumpen eines Lösungsmediums in die Schichten und Abpumpen gesättigter Salzlösung abgebaut werden und in welchen das Deckmedium das Dach der unterirdischen Höhle schützt, worin die Sonde mit einer ersten Elektrodeneinrichtung versehen ist, die in einem bestimmten Abstand von einer zweiten Elektrodeneinrichtung angeordnet ist, wobei beide Elektrodeneinrichtungen zur kapazitativen Messung geeignet sind und weiterhin Einrichtungen zur Bestimmung der Kapazität der ersten und zweiten Elektrodeneinrichtung umfassen, worin die Sonde weiterhin mit zur Übertragung der erhaltenen Informationen nach oben geeigneten Einrichtungen ausgestattet ist, dadurch gekennzeichnet, daß die erste Elektrodeneinrichtung aus einer Vielzahl von einzelnen übereinander angeordneten Segmenten besteht, wobei jedes einzelne Segment eine Höhe zwischen 5 und 50 cm aufweist und eine Breite zwischen 1 und 5 cm, und dadurch, daß die zweite Elektrodeneinrichtung die Wand einer Röhre ist, an welcher die Sonde angebracht ist.

2. Bohrlochsonde, wie in Anspruch 1 beansprucht, dadurch gekennzeichnet, daß einzelne Segmente mit überlappendem Bereich vorhanden sind.

**Revendications**

1. Un outil à descendre dans un forage pour détecter capacitivement la position ou le niveau d'une interface entre fluide de couverture et saumure dans des cavités souterraines de mines de sel où les couches de sel sont exploitées en refoulant un agent dissolvant dans les couches et en extrayant une saumure saturée, et où le fluide de couverture protège le toit de la cavité souterraine, où l'outil comporte un premier moyen servant d'électrode qui est placé à une distance déterminée d'un second moyen servant d'électrode, ces deux moyens servant d'électrodes étant prévus pour la mesure de capacités, et il comporte aussi des moyens pour déterminer la capacité du premier et du second moyens servant d'électrodes, l'outil étant pourvu en outre de moyens convenables pour transmettre en haut du forage l'information obtenue, caractérisé en ce que le premier moyen servant d'électrode consiste en plusieurs segments individuels disposés les uns au-dessus des autres, chaque segment individuel ayant une hauteur comprise entre 5 et 50 cm et une largeur comprise entre 1 et 5 cm, et en ce que le second moyen servant d'électrode est la paroi d'un conduit, sur lequel l'outil est installé.

2. L'outil à descendre dans un forage selon la revendication 1, caractérisé en ce que des segments individuels qui so chevauchent sont présents.

**Brine**

**Oil**

**Salt**

FIG.1

Salt

Brine

Oil

FIG.2

FIG.3b

FIG.3a

FIG.4